# EUROPEAN PATENT SPECIFICATION

(11) **EP 2 933 030 B1**
(45) Date of publication and mention of the grant of the patent: **23.01.2019**
(21) Application number: 12889687.5
(22) Date of filing: 07.12.2012
(51) Int. Cl.: B09B 5/00, C02F 11/12, F23G 5/46, F23G 5/04, F23G 7/06

(54) **WASTE AND SEWAGE TREATMENT SYSTEM**
ABFALL UND ABWASSERBEHANDLUNGSANLAGE
SYSTÈME DE TRAITEMENT DES DÉCHETS ET DES EAUX USÉES

(30) Priority: 06.12.2012 KR 20120141479
(43) Date of publication of application: 21.10.2015
(73) Proprietor: Korea Institute Of Construction Technology, Goyang-si, Gyeonggi-do 411-712 (KR)
(72) Inventor: KIM, Tae-Hyung, Goyang-si Gyeonggi-do 411-707 (KR); KIM, Eun-Ju, Goyang-si Gyeonggi-do 410-708 (KR)
(74) Representative: Zardi, Marco
(86) International application number: PCT/KR2012/010650
(87) International publication number: WO 2014/088138

(56) References cited:
- WO-A1-2012/097659
- DE-A1- 19 731 010
- JP-A- H1 057 998
- JP-A- 2000 334 419
- JP-A- 2008 253 963
- JP-A- 2011 167 648
- KR-Y1- 200 388 749
- US-A- 3 954 069
- US-A1- 2009 031 698
- US-A1- 2011 179 981
- US-B1- 6 490 866

## Description

### TECHNICAL FIELD

The present invention relates to a waste and sewage treatment system, which generates electric power using high-temperature water vapor generated when an organic waste is incinerated at high temperature and low-temperature water vapor generated when a combustible waste is incinerated at low temperature.

### BACKGROUND ART

Organic wastes are a type of biomass as wastes with an organic content of 40% by weight or more which are originated from animals and plants. These organic wastes generally correspond to livestock excretions, sewage sludge, food wastes, etc., and have high decomposition properties due to containing a quantity of water and decomposable organics. For this reason, the disposal process of organic wastes causes many problems. Energy such as heat and electricity may be obtained by methane gas generated from the organic wastes through thermochemical or biological reaction.

Domestic wastes refer to wastes generated in general homes, offices, etc., and are treated by a method such as landfill, incineration, or recycling. The wastes, which may be burned in the incinerator from among the domestic wastes, are referred to as "combustible wastes". Since heat is generated when the combustible wastes are incinerated, the combustible wastes may be used to obtain steam for home heating or to generate electric power required for factories.

Conventional waste treatment systems will be described below.

Japanese Patent No. 3484539 (October 24, 2003) discloses a method and system for recycling recycled resources such as food wastes, in which methane gas is generated using waste heat of a gas engine for cogeneration (combined heat and power generation), the generated methane is supplied to the gas engine, and electric power generated by the cogeneration is sold or used in recycle equipment.

Korean Patent Laid-open Publication No. 2011-0080866 (July 13, 2011) discloses a system for recycling food wastes, including a regenerative high-temperature oxidation tower in order to remove offensive odors generated in the process of treating food wastes.

Japanese Patent Laid-open Publication No. 2003-154387 (May 27, 2003) discloses a drainage treatment apparatus in which cogeneration is performed using methane gas generated by an anaerobic reactor of a sewage treatment plant, electric power generated by the cogeneration is supplied to an oxidation-accelerating reactor of the sewage treatment plant, waste heat is supplied to the anaerobic reactor, the oxidation-accelerating reactor generates ozone using the electric power supplied from a cogeneration system, and a treatment for accelerating oxidation is performed using one of a combination of ozone and hydrogen peroxide, a combination of ozone and ultraviolet light, and a combination of ozone, hydrogen peroxide, and ultraviolet light in the oxidation-accelerating reactor.

Each of the conventional waste treatment systems has the following problem.

When combustible wastes are incinerated at a temperature of 400°C or more in the general plant in which heat energy obtained by incineration of wastes is supplied to a power source, a boiler pipe is rapidly corroded due to complex effects of dust and corrosive gas such as hydrogen chloride and sulfur oxides. Therefore, the combustible wastes have to be incinerated at a temperature equal to or less than the above temperature. For this reason, there is a problem in that the combustible wastes are incinerated in the limited temperature range of 300°C to 400°C.

On the other hand, since the above problem like the above combustible wastes does not occur in organic wastes, the waste treatment system has an advantage capable of enhancing power generation efficiency by an increase in incineration temperature. However, there is a problem in that the inflow of the organic wastes is in a state of flux and the waste treatment system has an increased storage capacity due to water contained in the organic wastes.

In addition, the waste treatment system has a problem in that energy is wasted and rivers are polluted since waste heat generated after power generation is not properly used.

US 2009/031698 A1 discloses liquid and solid biofueled power plants that make renewable energy and utilize waste heat for a variety of applications including waste treatment plant processes, biofuel treatment and processing (e.g., sludge drying), fish farms, green houses, and the like. WO 2012/097659 A1 discloses non-contact flue-gas waste-heat sludge-drying system utilizing waste heat from flue gas of thermal power plant boilers or other industrial boilers as heat source to further dehydrate and dry the dehydrated sludge from a waste water treatment plant.

### DISCLOSURE

### TECHNICAL PROBLEM

Accordingly, the present invention has been made in view of the above-mentioned problems, and an object thereof is to provide a waste and sewage treatment system capable of generating electric power using high-temperature water vapor generated when an organic waste is incinerated at high temperature and low-temperature water vapor generated when a combustible waste is incinerated at lov temperature.

### TECHNICAL SOLUTION

In accordance with the present invention, a waste and sewage treatment system includes a sewage treatment plant and an organic waste supply unit drying, storing, and supplying an organic waste, a combustible waste supply unit supplying a combustible waste, a combustion unit connected to the organic waste supply unit and the combustible waste supply unit so as to burn the organic waste and the combustible waste, a power generation unit performing cogeneration using heat generated by the combustion unit, and a hot water generation unit connected to the power generation unit and the organic waste supply unit so as to generate hot water using waste heat generated by the power generation unit, wherein the organic waste supply unit is connected to the hot water generation unit to dry the organic waste using the hot water supplied from the hot water generation unit, the hot water generation unit is connected to the sewage treatment plant, the hot water of the hot water generation unit is supplied to the sewage treatment plant, characterized in that the organic waste supply unit is connected to the sewage treatment plant, and the waste heat of the organic waste supply unit is supplied to the sewage treatment plant, and the combustion unit includes a first combustion device burning the organic waste supplied from the organic waste supply unit, and a second combustion device burning the combustible waste supplied from the combustible waste supply unit.

The second combustion device may burn the combustible waste at a temperature of 300°C to 400°C.

The power generation unit may include a first generator performing cogeneration using heat supplied from the first combustion device, and a second generator performing cogeneration using heat supplied from the second combustion device.

The organic waste supply unit may include a waste dryer connected to the hot water generation unit to dry the organic waste, and an organic waste storage tank storing the organic waste dried by the waste dryer.

The waste dryer may supply waste heat, used to dry the organic waste through the hot water supplied from the hot water generation unit, to the sewage treatment plant.

The hot water generation unit may be connected to an external thermal network for supply of hot water.

The power generation unit may be connected to an external power network for supply of electric power.

The waste treatment system may further include an air collection unit connected to the organic waste supply, the sewage treatment plant, and the combustion unit, so that an offensive odor generated from the organic waste supply unit and the sewage treatment plant is collected by the air collection unit so as to be transferred to and burned by the combustion unit.

Additional advantages, objects, and features of the invention will be set forth in part in the description which follows and in part will become apparent to those having ordinary skill in the art upon examination of the following or may be learned from practice of the invention.

### BRIEF DESCRIPTION OF DRAWINGS

The above and other objects, features and other advantages of the present invention will be more clearly understood from the following detailed description taken in conjunction with the accompanying drawings, in which:
Fig. 1 is a diagram illustrating a configuration of a waste treatment system connected to a sewage treatment plant according to an embodiment of the present invention;
Fig. 2 is a diagram illustrating a waste treatment flow and a heat generation flow in the waste treatment system connected to a sewage treatment plant according to the embodiment of the present invention;
Fig. 3 is a diagram illustrating a waste heat utilization flow in the waste treatment system connected to a sewage treatment plant according to the embodiment of the present invention; and
Fig. 4 is a diagram illustrating an offensive odor removal flow in the waste treatment system connected to a sewage treatment plant according to the embodiment of the present invention.

### BEST MODE FOR INVENTION

A waste treatment system according to the present invention includes an organic waste supply unit that supplies a required amount of organic waste in a state of drying and storing an organic waste, a combustible waste supply unit that stores and supplies a combustible waste, a combustion unit that is connected to the organic waste supply unit and the combustible waste supply unit so as to generate high-temperature water vapor from the organic waste and generate low-temperature water vapor from the combustible waste, a power generation unit that is connected to the combustion unit so as to generate electric power using the high-temperature water vapor and the low-temperature water vapor, and a hot water generation unit that generates hot water using waste heat generated by the power generation unit and is connected to the organic waste supply unit. The hot water generation unit and the organic waste supply unit are connected to a sewage treatment plant.

### MODE FOR INVENTION

Reference will now be made in more detail to exemplary embodiments of the present invention, examples of which are illustrated in the accompanying drawings.

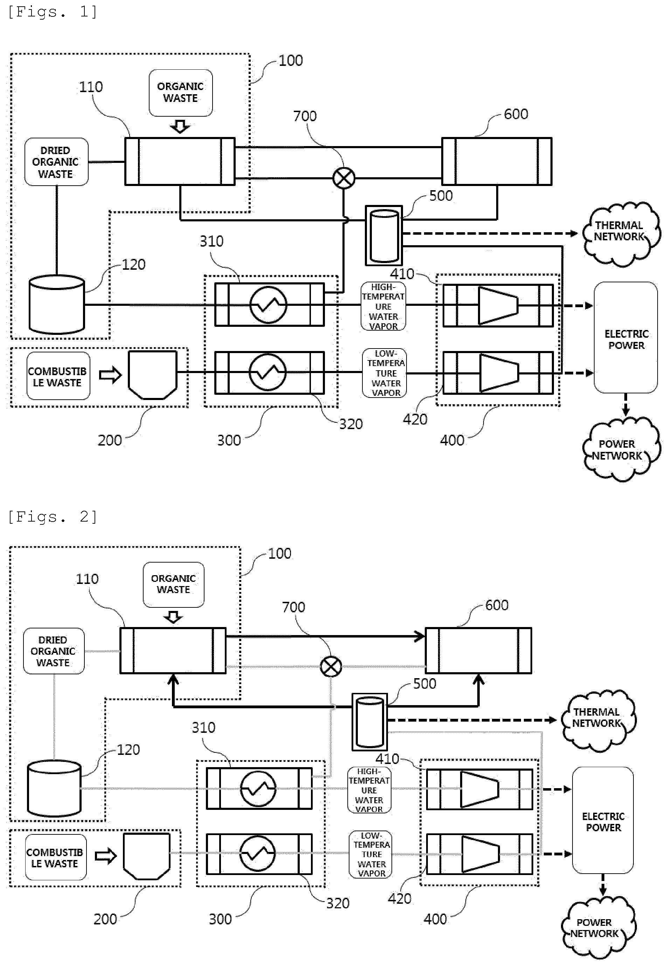

Figs. 1 to 4 illustrate a waste treatment system connected to a sewage treatment plant according to an exemplary embodiment of the present invention.

As illustrated in Fig. 1, an organic waste supply unit 100 serves to supply an organic waste to a combustion unit 300 by drying and storing the organic waste. The organic waste supply unit 100 includes a waste dryer 110 which heats and dries the organic waste.

The waste dryer 110 is connected to a hot water generation unit 500 to be described later, so as to dry the organic waste using heat supplied from the hot water generation unit 500. Since the supply of the organic waste is irregular, the organic waste has to be stored for a certain period and then to be constantly supplied to the combustion unit 300. For this reason, a large storage space is required due to water contained in the organic waste itself.

To this end, the organic waste is dried by the waste dryer 110 and is then stored. As a result, it is possible to reduce the volume of the waste and to constantly supply the waste.

The waste dryer 110 is connected to a sewage treatment plant 600 to be described later. Hot water supplied to the waste dryer 110 from the hot water generation unit 500 is changed into condensate water after drying of the waste and is transferred to the sewage treatment plant 600.

The organic waste supply unit 100 includes an organic waste storage tank 120 connected to the waste dryer 110. The organic waste storage tank 120 stores a dried organic waste supplied from the waste dryer 110 and supplies the dried organic waste to the combustion unit 300 to be described later. When the combustible waste is incinerated at a temperature of 400°C or more, a boiler pipe is rapidly corroded due to complex effects of dust and corrosive gas such as hydrogen chloride and sulfur oxides. Therefore, the combustible waste has to be incinerated in a limited temperature range of 300°C to 400°C.

However, since the supply of the combustible waste is not in a state of flux and is constantly performed, the combustible waste may be used as a basic heat source for generation of electric power through combustion thereof. The combustible waste is temporarily stored in a combustible waste supply unit 200 and is then supplied to the combustion unit 300.

The combustion unit 300 burns the dried organic waste supplied from the organic waste supply unit 100 and the combustible waste supplied from the combustible waste supply unit 200 so as to perform cogeneration (combined heat and power generation). Then, water vapor generated by the combustion unit 300 is supplied to a power generation unit 400 to be described later.

The combustion unit 300 includes a first combustion device 310 which burns the organic waste, and a second combustion device 320 which burns the combustible waste. The first combustion device 310 burns the organic waste, which may be heated at high temperature, to generate high-temperature water vapor. The second combustion device 320 burns the combustible waste, which may be heated at a temperature of 300°C to 400°C, to generate low-temperature water vapor.

The water vapor generated by the combustion unit 300 is supplied to the power generation unit 400 for generating electric power. The power generation unit 400 includes a first generator 410 connected to the first combustion device 310 to generate electric power, and a second generator 420 connected to the second combustion device 320 to generate electric power.

The first generator 410 may generate electric power with a high efficiency of about 30% since using the high-temperature water vapor supplied from the first combustion device 310. However, the second generator 420 may generate electric power with a low efficiency of about 13% since using the low-temperature water vapor supplied from the second combustion device 320.

The electric power generated by the power generation unit 400 may be supplied to a power network, in order to be supplied to houses, offices, factories, and the like which need electric power.

The power generation unit 400 is connected to the hot water generation unit 500 for generating hot water, and the hot water generation unit 500 generates hot water using the remaining waste heat after being used in the power generation unit 400.

The hot water generation unit 500 may supply the generated hot water to an external thermal network. The hot water generation unit 500 is connected to the organic waste supply unit 100 and the sewage treatment plant 600.

The remaining heat after being supplied to the thermal network by the hot water generation unit 500 is supplied to the waste dryer 110 of the organic waste supply unit 100. The waste dryer 110 dries the organic waste using the hot water supplied from the hot water generation unit 500.

The remaining hot water other than the hot water supplied to the thermal network and the waste dryer 110 by the hot water generation unit 500 is fully supplied to the sewage treatment plant 600. The sewage treatment plant 600 properly uses or disposes of the hot water supplied thereto.

The organic waste supply unit 100 and the sewage treatment plant 600 are connected to an air collection unit 700. The air collection unit 700 is connected to the combustion unit 300. The organic waste supply unit 100 and the sewage treatment plant 600 generate a quantity of offensive odors by themselves. These offensive odors are collected by the air collection unit 700 and are then transferred to the combustion unit 300. Then, the offensive odors are burned and treated by the combustion unit 300.

Hereinafter, the waste treatment system connected to a sewage treatment plant, having the above-mentioned configuration, according to the embodiment of the present invention will be described in more detail.

Fig. 2 illustrates a waste movement path and a waste combustion path in the waste treatment system connected to a sewage treatment plant according to the embodiment of the present invention. As illustrated in the drawing, the organic waste is supplied to and dried by the waste dryer 110 of the organic waste supply unit 100. The dried organic waste stored in the organic waste storage tank 120 is supplied to the first combustion device 310 of the combustion unit 300.

The organic waste supplied to the first combustion device 310 is burned at high temperature so that the high-temperature water vapor is generated by the first combustion device 310. The high-temperature water vapor generated by the first combustion device 310 is supplied to the first generator 410 of the power generation unit 400.

The first generator 410 generates electric power with high efficiency using the high-temperature water vapor. The electric power generated by the first generator 410 is supplied to the power network.

On the other hand, the combustible waste is temporarily stored in the combustible waste supply unit 200 and is then supplied to the second combustion device 320 of the combustion unit 300. The second combustion device 320 burns the supplied combustible waste at low temperature to generate the low-temperature water vapor.

The low-temperature water vapor generated by the second combustion device 320 is supplied to the second generator 420 of the power generation unit 400. The second generator 420 generates electric power with low efficiency using the low-temperature water vapor. The electric power generated by the second generator 420 is supplied to the power network.

The waste heat used in the first and second generators 410 and 420 is supplied to the hot water generation unit 500 for generating hot water.

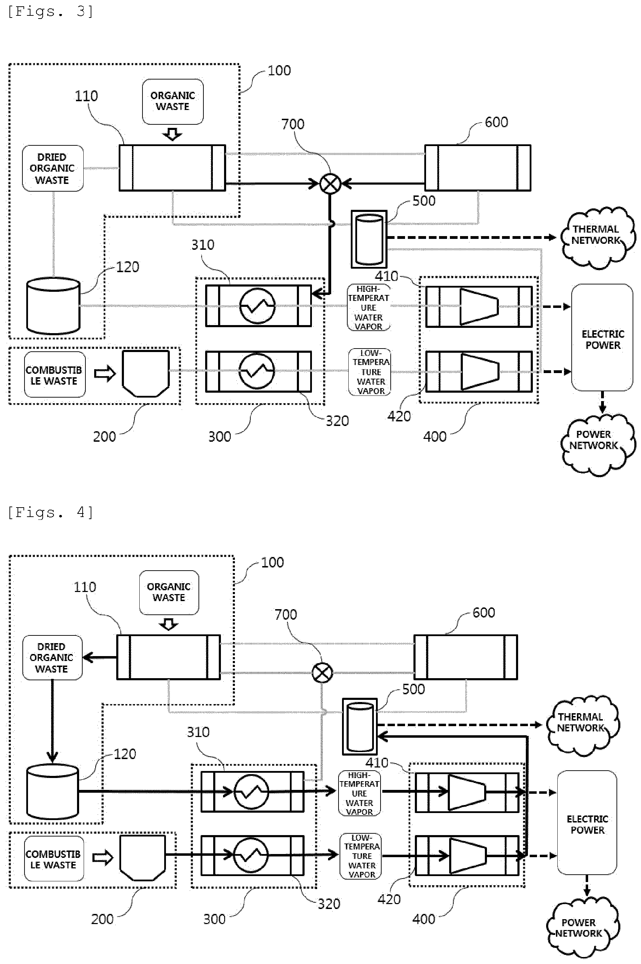

Fig. 3 illustrates a process of using the waste heat in the waste treatment system according to the embodiment of the present invention. The hot water generated by the hot water generation unit 500 may be supplied to the thermal network. The hot water generated by the hot water generation unit 500 may be supplied to the waste dryer 110 of the organic waste supply unit 100. The waste dryer 110 dries the organic waste using the hot water supplied from the hot water generating unit 500.

The remaining hot water other than the hot water supplied to the thermal network and the organic waste supply unit 100 of the hot water generated by the hot water generating unit 500 is supplied to the sewage treatment plant 600. The sewage treatment plant 600 may use or separately treat the hot water supplied thereto.

Fig. 4 illustrates a process of treating the offensive odors in the waste treatment system according to the embodiment of the present invention. The offensive odors generated by the organic waste supply unit 100 and the sewage treatment plant 600 are collected by the air collection unit 700. The offensive odors collected by the air collection unit 700 are transferred to and burned by the combustion unit 300.

The offensive odors burned by the combustion unit 300 may be filtered through a separate filter and be discharged to the outside.

Although the present invention has been described with respect to the illustrative embodiments, it will be apparent to those skilled in the art that various variations and modifications may be made without departing from the scope of the invention as defined in the following claims.

## Claims

1. A waste and sewage treatment system comprising a sewage treatment plant (600);:
an organic waste supply unit (100) adapted to dry, store, and supply an organic waste;
a combustible waste supply unit (200) adapted to supply a combustible waste;
a combustion unit (300) connected to the organic waste supply unit (100) and the combustible waste supply unit (200) so as to burn the organic waste and the combustible waste;
a power generation unit (400) adapted to perform cogeneration using heat generated by the combustion unit (300); and
a hot water generation unit (500) connected to the power generation unit (400) and the organic waste supply unit (100) so as to generate hot water using waste heat generated by the power generation unit (400), wherein:
the organic waste supply unit (100) is connected to the hot water generation unit (500) to dry the organic waste using the hot water supplied from the hot water generation unit (500); and
the hot water generation unit (500) is connected to the sewage treatment plant (600), and the hot water of the hot water generation unit (500) is supplied to the sewage treatment plant (600), and
**characterized in that** the organic waste supply unit (100) is connected to the sewage treatment plant (600), and the waste heat of the organic waste supply unit (100) is supplied to the sewage treatment plant (600), and
wherein the combustion unit (300) comprises:
a first combustion device (310) adapted to burn the organic waste supplied from the organic waste supply unit (100); and
a second combustion device (320) adapted to burn the combustible waste supplied from the combustible waste supply unit (200).

2. The waste and sewage treatment system according to claim 1, wherein the second combustion device (320) adapted to burn the combustible waste at a temperature of 300°C to 400°C.

3. The waste and sewage treatment system according to claim 1, wherein the power generation unit (400) comprises:
a first generator (410) adapted to perform cogeneration using heat supplied from the first combustion device (310); and
a second generator (420) adapted to perform cogeneration using heat supplied from the second combustion device (320).

4. The waste and sewage treatment system according to claim 1, wherein the organic waste supply unit (100) comprises:
a waste dryer (110) connected to the hot water generation unit (500) to dry the organic waste; and
an organic waste storage tank (120) adapted to store the organic waste dried by the waste dryer (110).

5. The waste and sewage treatment system according to claim 4, wherein the waste dryer (110) is adapted to supply waste heat, used to dry the organic waste through the hot water supplied from the hot water generation unit (500), to the sewage treatment plant (600).

6. The waste and sewage treatment system according to claim 1, wherein the hot water generation unit (500) is connected to an external thermal network for supply of hot water.

7. The waste and sewage treatment system according to claim 1, wherein the power generation unit (400) is connected to an external power network for supply of electric power.

8. The waste and sewage treatment system according to any one of claims 1 to 7, further comprising an air collection unit (700) connected to the organic waste supply, the sewage treatment plant (600), and the combustion unit (300), so that an offensive odor generated from the organic waste supply unit (100) and the sewage treatment plant (600) is collected by the air collection unit (700) so as to be transferred to and burned by the combustion unit (300).

## Patentansprüche

1. Abfall- und Abwasserbehandlungssystem umfassend
eine Abwasserbehandlungsanlage (600);
eine Zuführeinheit (100) für organischen Abfall, die dazu ausgelegt ist, organischen Abfall zu trocknen, zu lagern und zuzuführen;
eine Zuführeinheit (200) für brennbaren Abfall, die dazu ausgelegt ist, brennbaren Abfall zuzuführen;
eine Verbrennungseinheit (300), die mit der Zuführeinheit (100) für organischen Abfall und der Zuführeinheit (200) für brennbaren Abfall verbunden ist, um den organischen Abfall und den brennbaren Abfall zu verbrennen;
eine Energieerzeugungseinheit (400), die dazu ausgelegt ist, eine Kraft-Wärme-Kopplung unter Verwendung von von der Verbrennungseinheit (300) erzeugter Wärme durchzuführen; und
eine Warmwassererzeugungseinheit (500), die mit der Energieerzeugungseinheit (400) und der Zuführeinheit (100) für organischen Abfall verbunden ist, um Warmwasser unter Verwendung von Abwärme zu erzeugen, die durch die Energieerzeugungseinheit (400) erzeugt wurde, wobei:
die Zuführeinheit (100) für organischen Abfall mit der Warmwassererzeugungseinheit (500) verbunden ist, um den organischen Abfall unter Verwendung des von der Warmwassererzeugungseinheit (500) zugeführten Warmwassers zu trocknen; und
die Warmwassererzeugungseinheit (500) mit der Abwasserbehandlungsanlage (600) verbunden ist und das Warmwasser der Warmwassererzeugungseinheit (500) der Abwasserbehandlungsanlage (600) zugeführt wird, und
**dadurch gekennzeichnet, dass** die Zuführeinheit (100) für organischen Abfall mit der Abwasserbehandlungsanlage (600) verbunden ist und die Abwärme der Zuführeinheit (100) für organischen Abfall der Abwasserbehandlungsanlage (600) zugeführt wird, und
wobei die Verbrennungseinheit (300) umfasst:
eine erste Verbrennungsvorrichtung (310), die dazu ausgelegt ist, den von der Zuführeinheit (100) für organischen Abfall zugeführten organischen Abfall zu verbrennen, und
eine zweite Verbrennungsvorrichtung (320), die dazu ausgelegt ist, den von der Zuführeinheit (200) für brennbaren Abfall zugeführten brennbaren Abfall zu verbrennen.

2. Abfall- und Abwasserbehandlungssystem nach Anspruch 1, wobei die zweite Verbrennungsvorrichtung (320) dazu ausgelegt ist, den brennbaren Abfall bei einer Temperatur von 300°C bis 400°C zu verbrennen.

3. Abfall- und Abwasserbehandlungssystem nach Anspruch 1, wobei die Energieerzeugungseinheit (400) umfasst:
einen ersten Generator (410), der dazu ausgelegt ist, eine Kraft-Wärme-Kopplung unter Verwendung von von der ersten Verbrennungseinheit (310) erzeugter Wärme durchzuführen; und
einen zweiten Generator (420), der dazu ausgelegt ist, eine Kraft-Wärme-Kopplung unter Verwendung von von der zweiten Verbrennungseinheit (320) erzeugter Wärme durchzuführen.

4. Abfall- und Abwasserbehandlungssystem nach Anspruch 1, wobei die Zuführeinheit (100) für organischen Abfall umfasst:
einen Abfalltrockner (110), der mit der Warmwassererzeugungseinheit (500) verbunden ist, um den organischen Abfall zu trocknen; und
einen Lagertank (120) für organischen Abfall, der dazu ausgelegt ist, den durch den Abfalltrockner (110) getrockneten organischen Abfall zu lagern.

5. Abfall- und Abwasserbehandlungssystem nach Anspruch 4, wobei der Abfalltrockner (110) dazu ausgelegt ist, Abwärme, die zum Trocknen des organischen Abfalls durch das von der Warmwassererzeugungseinheit (500) zugeführte Warmwasser verwendet wird, der Abwasserbehandlungsanlage (600) zuzuführen.

6. Abfall- und Abwasserbehandlungssystem nach Anspruch 1, wobei die Warmwassererzeugungseinheit (500) mit einem externen Wärmenetz für die Zufuhr von Warmwasser verbunden ist.

7. Abfall- und Abwasserbehandlungssystem nach Anspruch 1, wobei die Energieerzeugungseinheit (400) mit einem externen Energienetz für die Zufuhr von elektrischer Energie verbunden ist.

8. Abfall- und Abwasserbehandlungssystem nach einem der Ansprüche 1 bis 7, ferner umfassend eine Luftsammeleinheit (700), die mit der Zufuhr für organischen Abfall, der Abwasserbehandlungsanlage (600) und der Verbrennungseinheit (300) derart verbunden ist, dass ein von der Zuführeinheit (100) für organischen Abfall und der Abwasserbehandlungsanlage (600) erzeugter unangenehmer Geruch von der Luftsammeleinheit (700) so gesammelt wird, dass er an die Verbrennungseinheit (300) überführt und von ihr verbrannt wird.

## Revendications

1. Système de traitement des déchets et des eaux usées comprenant une station de traitement des eaux usées (600),
- une unité d'alimentation en déchets organiques (100) adaptée à sécher, stocker et fournir les déchets organiques,
- une unité d'alimentation en déchets combustibles (200) adaptée à fournir des déchets combustibles,
- une unité de combustion (300) connectée à l'unité d'alimentation en déchets organiques (100) et à l'unité d'alimentation en déchets combustibles (200) de manière à brûler les déchets organiques et les déchets combustibles,
- une unité de génération de courant (400) adaptée à réaliser une cogénération utilisant la chaleur générée par l'unité de combustion (300), et
- une unité de génération d'eau chaude (500) connectée à l'unité de génération de courant (400) et à l'unité d'alimentation en déchets organiques (100) de manière à générer de l'eau chaude en utilisant la chaleur résiduelle générée par l'unité de génération de courant (400), où
- l'unité d'alimentation en déchets organiques (100) est connectée à l'unité de génération d'eau chaude (500) afin de sécher les déchets organiques en utilisant l'eau chaude fournie par l'unité de génération d'eau chaude (500), et
- l'unité de génération d'eau chaude (500) est connectée à la station de traitement des eaux usées (600), et l'eau chaude de l'unité de génération d'eau chaude (500) est fournie à la station de traitement des eaux usées (600), et
- **caractérisé en ce que** l'unité d'alimentation en déchets organiques (100) est connectée à la station de traitement des eaux usées (600) et la chaleur résiduelle de l'unité d'alimentation en déchets organiques (100) est fournie à la station de traitement des eaux usées (600) et
- où l'unité de combustion (300) comprend :
- un premier dispositif de combustion (310) adapté à brûler les déchets organiques fournis par l'unité d'alimentation en déchets organiques (100) et
- un deuxième dispositif de combustion (320) adapté à brûler les déchets combustibles fournis par l'unité d'alimentation en déchets combustibles (200).

2. Système de traitement des déchets et des eaux usées selon la revendication 1, **caractérisé en ce que** le deuxième dispositif de combustion (320) est adapté à brûler les déchets combustibles à une température comprise entre 300°C et 400°C.

3. Système de traitement des déchets et des eaux usées selon la revendication 1, **caractérisé en ce que** l'unité de génération du courant (400) comprend :
- un premier générateur (410) adapté à réaliser une cogénération utilisant la chaleur fournie par le premier dispositif de combustion (310) et
- un deuxième générateur (420) adapté à réaliser une cogénération utilisant la chaleur fournie par le deuxième dispositif de combustion (320).

4. Système de traitement des déchets et des eaux usées selon la revendication 1, **caractérisé en ce que** l'unité d'alimentation en déchets organiques (100) comprend :
- un séchoir à déchets (110) connecté à l'unité de génération d'eau chaude (500) pour sécher les déchets organiques et
- un réservoir de stockage des déchets (120) adapté à stocker les déchets organiques séchés par le séchoir à déchets (110).

5. Système de traitement des déchets et des eaux usées selon la revendication 4, **caractérisé en ce que** le séchoir à déchets (110) est adapté à fournir de la chaleur résiduelle, utilisée pour sécher les déchets organiques à travers l'eau chaude fournie par l'unité de génération d'eau chaude (500), à la station de traitement des eaux usées (600).

6. Système de traitement des déchets et des eaux usées selon la revendication 1, **caractérisé en ce que** l'unité de génération d'eau chaude (500) est connectée à un réseau thermal externe pour l'alimentation en eau chaude.

7. Système de traitement des déchets et des eaux usées selon la revendication 1, **caractérisé en ce que** l'unité de génération du courant (400) est connectée à un réseau externe de courant pour l'alimentation en courant électrique.

8. Système de traitement des déchets et des eaux usées selon l'une quelconque des revendications 1 à 7, comprenant en outre une unité de collecte de l'air (700) connectée à l'alimentation en déchets organiques, à la station de traitement des eaux usées (600) et à l'unité de combustion (300), si bien qu'une odeur désagréable générée par l'unité d'alimentation en déchets organiques (100) et la station de traitement des eaux usées (600) est collectée par l'unité de collecte de l'air (700) de manière à être transférée et brûlée dans l'unité de combustion (300).
